# EUROPÄISCHE PATENTSCHRIFT

(11) **EP 1 099 632 B1**
(45) Veröffentlichungstag und Bekanntmachung des Hinweises auf die Patenterteilung: **06.08.2003**
(21) Anmeldenummer: 00810779.9
(22) Anmeldetag: 30.08.2000
(51) Int. Cl.: B65B 35/24, B65G 59/12

(54) **Verfahren und Vorrichtung zur Zuführung von flächigen Gegenständen zu einer Vereinzelung**
Method and device for feeding flat articles to their individual separation
Procédé et dispositif pour alimenter des articles plats vers leur séparation individuelle

(30) Priorität: 16.09.1999 CH 170299
(43) Veröffentlichungstag der Anmeldung: 16.05.2001
(73) Patentinhaber: Ferag AG, 8340 Hinwil (CH)
(72) Erfinder: Furter, Frank, 8408 Winterthur (CH)
(74) Vertreter: Frei, Alexandra Sarah

(56) Entgegenhaltungen:
- EP-A- 0 700 832
- DE-U- 9 105 495
- US-A- 2 577 765

## Beschreibung

Die Erfindung betrifft ein Verfahren und eine Vorrichtung nach den Oberbegriffen der entsprechenden unabhängigen Patentansprüche. Verfahren und Vorrichtung dienen dazu, flächige Gegenstände einer Vereinzelung zuzuführen, beispielsweise einer Vereinzelung zur Erzeugung eines regelmässig getakteten Gegenstands-Stromes, das heisst eines Stromes, in dem die Gegenstände mit regelmässigen Abständen hintereinander oder einander regelmässig überlappend gefördert werden.

Flächige Gegenstände werden beispielsweise für eine Bearbeitung vereinzelt, das heisst einzelne Gegenstände werden nacheinander von einer Gegenstands-Gruppe abgetrennt und werden in einem Gegenstands-Strom einzeln der Bearbeitung zugeführt. Um eine kontinuierliche Bearbeitung zu erreichen, ist die Gegenstands-Gruppe üblicherweise als Gegenstands-Puffer zwischen der Vereinzelung und der Zulieferung der Gegenstände ausgebildet. Das heisst mit anderen Worten, die Gegenstands-Gruppe umfasst eine in Grenzen variierende Zahl von Gegenständen, wobei die Grenzen derart ausgelegt sind, dass die Gegenstände in der Gruppe ausreichen, um den Vereinzelungsprozess während zu erwartenden Lücken in der Zulieferung möglichst ungestört weiter versorgen zu können und um Pausen im Vereinzelungsprozess aufnehmen zu können, ohne Störungen in der Zuführung zu erzeugen. Die Zulieferung der Gegenstände zur Gegenstands-Gruppe kann dabei batch-weise erfolgen oder im wesentlichen kontinuierlich, das heisst, die Gegenstands-Gruppe, aus der die Gegenstände vereinzelt werden, wird regelmässig oder bei Bedarf mit einer Mehrzahl von Gegenständen (batch) ergänzt oder es werden ihr regelmässig oder bei Bedarf Gegenstände in Form eines im wesentlichen kontinuierlichen Stromes, beispielsweise in einem Schuppenstrom zugefügt.

Für flächige Gegenstände ist es naheliegend, die Gegenstands-Gruppe, die als Puffer für eine Vereinzelung dient und aus der die Gegenstände vereinzelt werden, als Stapel auszubilden, das heisst, als Formation, in der die flächigen Gegenstände mit ihren Hauptflächen im wesentlichen aneinander liegen. Dabei werden von der einen Stirnseite des Stapels Gegenstände einzeln entnommen (vereinzelt), während zur anderen Stirnseite des Stapels Gegenstände ebenfalls gestapelt (batch-weise Zuführung) oder in einem quasi kontinuierlichen Strom (z.B. Schuppenstrom) zugefügt werden.

In der Weiterverarbeitung von Druckprodukten sind viele Vorrichtungen zur Vereinzelung von Druckprodukten ab Stapeln bekannt, wobei die Produkte den Stapeln batch-weise oder kontinuierlich zugefügt werden. Die Vorrichtungen weisen Führungsmittel für die Führung des Puffer-Stapels und Fördermittel zur Förderung der Produkte im Puffer-Stapel gegen die Vereinzelung auf, sowie Mittel für die Vereinzelung der Druckprodukte an der einen Stirnseite der Führungsmittel und Mittel zum Zufügen von Druckprodukten auf der gegenüberliegenden Stirnseite der Führungsmittel. Dabei sind die Vereinzelungsmittel relativ zu den Führungsmitteln üblicherweise stationär angeordnet und die Mittel zum Zufügen mindestens teilweise in Richtung der Stapelachse (senkrecht zur flächigen Ausdehnung der Produkte) beweglich, das heisst, an eine variierende Zahl von Gegenständen im Stapel (variierende Stapelhöhe) anpassbar.

Je nach Anwendung und je nach Eigenschaften der zu vereinzelnden Gegenstände sind die Pufferstapel eher stehend (Gegenstände liegen aufeinander mit im wesentlichen horizontaler, flächiger Ausdehnung, Stapelachse im wesentlichen senkrecht) oder liegend (Gegenstände stehen auf einer ihrer Kanten oder Schmalseiten nebeneinander mit im wesentlichen senkrechter, flächiger Ausdehnung, Stapelachse waagrecht oder schief). In vielen Fällen wird die Schwerkraft mindestens teilweise für die Aufrechterhaltung der Stapel-Ordnung und/oder für die Förderung der Gegenstände gegen die Vereinzelung ausgenützt. In allen Fällen treten für die Führung und/oder die Förderung Kräfte auf, die über die gestapelten Gegenstände übertragen werden. Damit sich eine derartige Kraftübertragung nicht negativ auf die Ordnung der Gegenstände im Stapel auswirken, sind diese Kräfte entsprechend zu dimensionieren und auszurichten, sind geeignete Mittel zur Führung des Stapels vorzusehen und/oder sind an die Gegenstände bezüglich ihrer Gestalt und ihren mechanischen Eigenschaften entsprechende Bedingungen zu stellen.

Es zeigt sich, dass flächige Gegenstände, die zwar alle eine im wesentlichen gleiche und gut definierte flächige Ausdehnung aber eine innerhalb von Grenzen unregelmässige und/oder sich verändernde Dicke haben, flächige Gegenstände also, die nicht oder nur sehr beschränkt zu freien Stapeln gestapelt werden können, mit den genannten Vereinzelungs-Vorrichtungen nicht oder nur mit einer sehr beschränkten Geschwindigkeiten vereinzelt werden können. Dies rührt insbesondere davon her, dass derartige Gegenstände in einem Stapel, insbesondere auch in einem geführten Stapel, mehr oder weniger labile Positionen haben und dass diese Positionen bei der Übertragung von Kräften über die Gegenstände noch labiler werden und Störungen im Stapel bedingen können.

Derartige, schwierig stapelbare und dadurch schwierig aus einem Stapel zu vereinzelnde Gegenstände sind beispielsweise Musterbeutel, wie sie vielfach zu Werbezwecken in Druckprodukte eingeklebt oder Druckprodukten in anderer Weise zugefügt und für diesen Zweck aus Gruppen vereinzelt werden. Diese Musterbeutel bestehen beispielsweise aus zwei Zuschnitten aus Papier oder aus einer Kunststofffolie, welche zwei Zuschnitte rundum den Kanten entlang miteinander verbunden sind und in ihrer Mitte einen kissenförmigen Hohlraum bilden. In derartigen Musterbeuteln werden insbesondere Muster von flüssigen, pastösen, pulverigen oder körnigen Produkten verteilt, aber auch welche Gegenstände (z.B. Feuchttücher) oder kleine sich frei im Hohlraum des Musterbeutels bewegende Gegenstände. Solche Musterbeutel weisen üblicherweise eine recht gut definierte, sich kaum verändernde flächige Ausdehnung auf, das heisst, sie sind beispielsweise quadratisch, rechteckig oder rund, und sie haben eine derartige Eigensteifigkeit, dass sie entsprechend gestützt auf einer Kante stabil stehen können. Quer zu ihrer flächigen Ausdehnung weisen sie aber Dickenprofile auf, die sich nicht nur von Gegenstand zu Gegenstand voneinander unterscheiden können, sondern die sich auch je nach Handhabung verändern können.

Eine freie Stapelung derartiger Musterbeutel ist kaum oder nur mit sehr kleinen Stapelhöhen möglich und in einem geführten Stapel (z.B. stehender Stapel in einem Stapelschacht oder liegender Stapel in einem Stapelkanal) ist es kaum möglich, Kräfte über eine grössere Anzahl derartiger Beutel zu übertragen. Die Positionen der einzelnen Gegenstände im Stapel sind unregelmässig und nicht vorhersehbar.

Um die oben beschriebenen Musterbeutel besser stapelbar und damit besser von einem Stapel vereinzelbar zu machen, wird in der Publikation EP-0739822 (oder US-5735107, F410) derselben Anmelderin vorgeschlagen, die Form der Musterbeutel zu stabilisieren durch Versteifung und Verdickung der Beutelkanten derart, dass diese dem Musterbeutel einen stabilen Rahmen geben, durch den die Beutel einfach und stabil stapelbar werden. In dieser Weise stabilisierte Musterbeutel können mit im wesentlichen gleichen Methoden und Vorrichtungen und mit gleichen, hohen Vereinzelungs-Geschwindigkeiten ab Stapeln vereinzelt werden, wie dies für andere, einfach und stabil stapelbare Gegenstände, wie beispielsweise Postkarten der Fall ist.

Ähnliche Eigenschaften bezüglich Stapelung haben nicht nur die oben beschriebenen Musterbeutel, sondern auch anders geformte Beutel, die an sich flächig sind, die aber einen leicht deformierbaren und/oder beweglichen Inhalt haben, sowie auch mindestens zum Teil flächige Gegenstände mit einem zwar unveränderbaren aber unregelmässigen Dickenprofil.

Die Erfindung stellt sich nun die Aufgabe, ein Verfahren und eine Vorrichtung zu schaffen, mit denen flächige Gegenstände mit den oben genannten Eigenschaften, die die Gegenstände schwer stapelbar machen, einer Vereinzelung zugeführt werden können, derart, dass eine hohe Vereinzelungsleistung im Bereich von mehreren Zehntausend Gegenständen pro Stunde möglich wird. Verfahren und Vorrichtung sollen zusätzlich einfach an verschiedene Formate von Gegenständen anpassbar sein.

Diese Aufgabe wird gelöst durch das Verfahren und die Vorrichtung, wie sie in den unabhängigen Patentansprüchen definiert sind.

Gemäss dem erfindungsgemässen Verfahren werden die flächigen Gegenstände in einem im wesentlichen liegenden Stapel (Stapelachse waagrecht oder schief), in dem die Gegenstände auf einer ihrer Kanten stehend angeordnet sind, der Vereinzelung zugefördert. Dieser Stapel besteht aus einem Vereinzelungs-seitigen Vereinzelungsstapel und einem Zulieferungs-seitigen Vorstapel, wobei die Gegenstände vom Vereinzelungsstapel einzeln entnommen (vereinzelt) und zum Vorstapel batch-weise oder im wesentlichen kontinuierlich zugeliefert werden und wobei der Vorstapel im wesentlichen die Pufferfunktion übernimmt.

Der Vereinzelungsstapel ist von Stapelführungsmitteln geführt und umfasst eine bedeutend kleinere Zahl von Gegenständen als der Vorstapel, wobei die Zahl der Gegenstände im Vereinzelungsstapel nur in sehr engen Grenzen variiert, das heisst möglichst konstant gehalten wird. Auch der Vorstapel ist von Strapelführungsmitteln geführt, wobei aber auch die einzelnen Gegenstände im Vorstapel mindestens beschränkt geführt sind. Die Anzahl der Gegenstände im Vorstapel ist bedeutend grösser als im Vereinzelungsstapel und variiert im Betrieb bedingt durch die Pufferfunktion bedeutend mehr als die Anzahl von Gegenständen im Vereinzelungsstapel. Ein weiterer Unterschied zwischen dem Vereinzelungsstapel und dem Vorstapel besteht darin, dass die Ordnungs-Anforderungen, das heisst die Anforderungen an die Regelmässigkeit der Gegenstands-Positionen im Vereinzelungsstapel bedeutend grösser sind als im Vorstapel.

Eine Vorrichtung zur Durchführung des erfindungsgemässen Verfahrens weist im wesentlichen vier Bereiche auf: einen Zufügungs-Bereich, einen Vorstapel-Bereich, einen Vereinzelungsstapel-Bereich und einen Vereinzelungsbereich, welche Bereiche in der genannten Reihenfolge in Förderrichtung der Gegenstände aufeinander folgen.

Das erfindungsgemässe Verfahren und beispielhafte Ausführungsformen der erfindungsgemässen Vorrichtung werden anhand der folgenden Figuren im Detail beschrieben . Dabei zeigen:
- **Figuren 1, 2 und 3**: das Prinzip des erfindungsgemässen Verfahrens;
- **Figur 4**: ein Schnitt in Förderrichtung durch eine beispielhafte Ausführungsform der erfindungsgemässen Vorrichtung;
- **Figuren 5, 6 und 7**: Schnitte quer zur Förderrichtung durch die Ausführungsform der erfindungsgemässen Vorrichtung gemäss Figur 4.

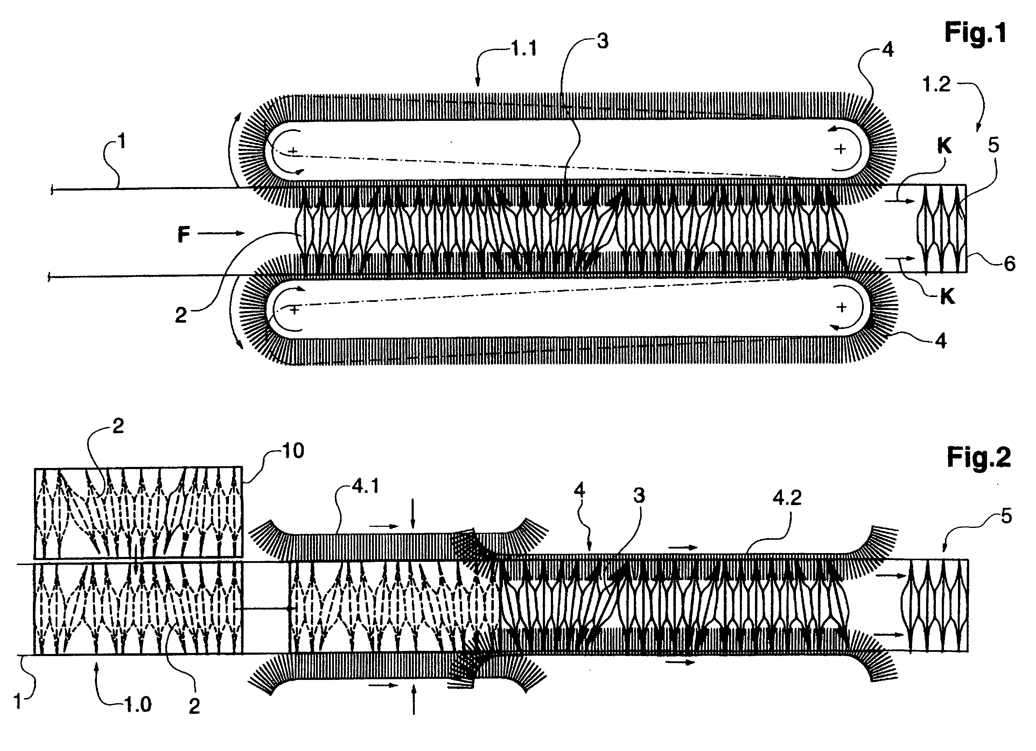

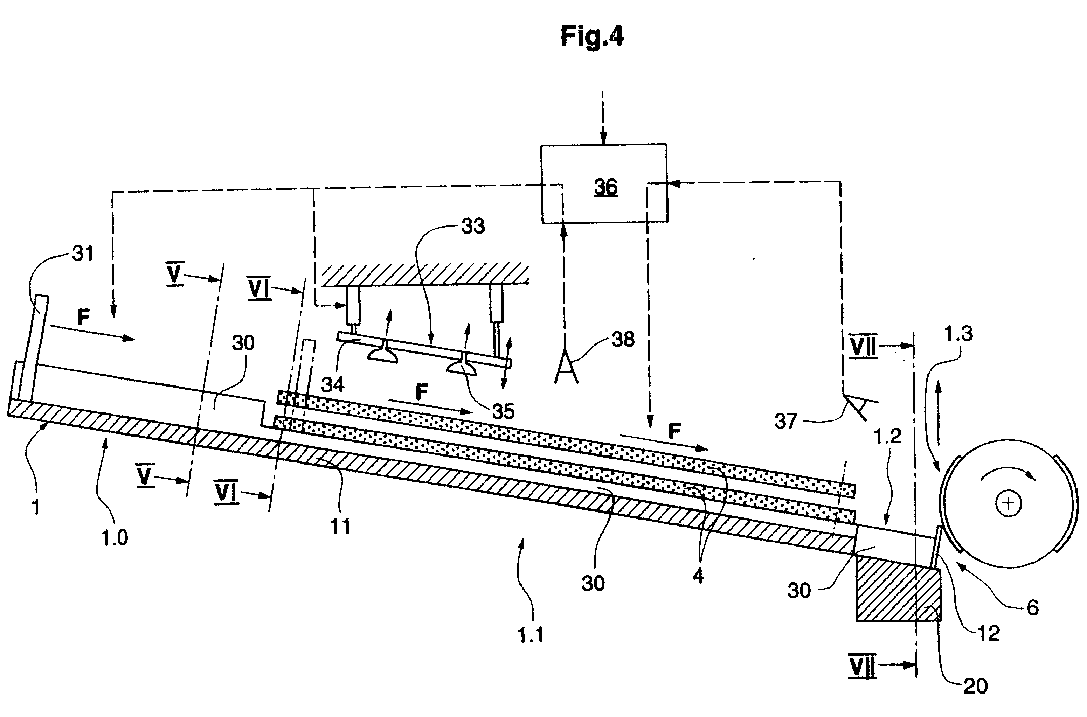

**Figuren 1, 2 und 3** zeigen sehr schematisch das Prinzip des erfindungsgemässen Verfahrens am Beispiel einer bevorzugten Ausführungsform der erfindungsgemässen Vorrichtung.

Figur 1 zeigt eine Vogelschau auf einen gegen oben offenen Stapelkanal 1 mit einem Vorstapel-Bereich 1.1 und einem Vereinzelungsstapel-Bereich 1.2. Im Stapelkanal 1 werden beispielsweise rechteckige Musterbeutel (Gegenstände 2) mit einem unregelmässigen und/oder sich verändernden Dickenprofil, wie sie weiter oben beschrieben sind, in einem im wesentlichen liegenden Stapel, das heisst auf einer ihrer Kanten stehend, in der allgemeinen Förderrichtung F gegen eine Vereinzelung (Stapelkanal-Ende 6) gefördert. Der Stapelkanal 1 ist vorteilhafterweise mindestens im Vereinzelungsstapel-Bereich 1.2 und im Übergangsbereich zwischen Vorstapel-Bereich 1.1 und Vereinzelungsstapel-Bereich 1.2 in Förderrichtung F leicht abfallend und mindestes in seiner Breite für verschiedene Formate von zu vereinzelnden Gegenständen einstellbar.

Der Boden und die seitlichen Wände des Stapelkanals 1 dienen als Stapel-Führungsmittel. Ferner sind im Vorstapel-Bereich Mittel zur Führung der einzelnen Gegenstände 2 des Vorstapels 3 vorgesehen. Diese Führungsmittel sind derart ausgestaltet, dass sie die Positionen der einzelnen Gegenstände im Vorstapel 3 nicht vorgeben, sondern derart, dass sie eine nur mehr oder weniger regelmässige Ordnung der Gegenstände im Vorstapel stützend aufrechterhalten können. Die Mittel zur Führung der einzelnen Gegenstände dienen vorteilhafterweise auch der Förderung und sind beispielsweise als ein Paar von gegenläufig angetriebenen Bürstenbändern 4 ausgebildet, wobei der Abstand der Bürstenbänder 4 entsprechend dem Format der zu vereinzelnden Gegenstände einstellbar ist.

Im Vereinzelungsstapel-Bereich 1.2 werden die Gegenstände 2, die hier den kleinen Vereinzelungs-Stapel 5 bilden, nicht mehr einzeln geführt sondern nur noch durch die als Stapelführungsmittel dienenden Wände und Boden des Stapelkanals 1. Dabei werden sie mit geeigneten Förderkräften K (z.B. Druckluftströme) als Stapel, das heisst durch über die Gegenstände übertragene Kräfte, gegen das Vereinzelungsseitige Ende 6 des Stapelkanals 1 gefördert und zur Stabilisierung und möglichst genauen Positionierung leicht gegen dieses gepresst, wobei die auf die Gegenstände wirkenden Kräfte K derart klein sein sollen, dass eine zwischen den Gegenständen entstehende Reibung die Vereinzelung nicht negativ beeinflussen kann. Der Vereinzelungsstapel-Bereich 1.2 ist derart dimensioniert, dass es für Gegenstände im Vereinzelungsstapel nicht möglich ist, um mehr als einen Grenzwert (z.B. 45°) von einer Position quer zur Förderrichtung F abzuweichen. Zwischen Vorstapel 3 und Vereinzelungsstapel 5 wird vorteilhafterweise ein Zwischenraum aufrechterhalten, der gross genug ist, um ein problemloses Eingreifen der Fördermittel des Vereinzelungsstapel-Bereiches zu erlauben, der aber gleichzeitig klein genug ist, um ein Umfallen der nicht einzeln geführten Gegenstände im Vereinzelungsstapel 5 zu verhindern.

Die Länge (Stapelhöhe) des Vorstapels 3 ist vom Verfahren her im wesentlichen unbeschränkt und wird lediglich durch die verwendeten Mittel zur Führung der einzelnen Gegenstände limitiert. Für die genannten Musterbeutel kann sie mehrere Hundert Musterbeutel betragen und um Hunderte von Musterbeuteln variieren. Die Länge des Vereinzelungsstapels 5 ist bestimmt durch Eigenschaften der zu vereinzelnden Gegenstände. Es darf im Vereinzelungsstapel 5 nicht möglich werden, dass ein Gegenstand derart stark aus seiner Ideal-Position quer zur Förderrichtung gedrängt werden kann, dass er durch die auf den Vereinzelungsstapel 5 angewendeten Kräfte im wesentlichen parallel zur Förderrichtung ausgerichtet wird, wodurch der Vereinzelungsvorgang empfindlich gestört würde. Für die genannten Musterbeutel liegt die Länge des Vereinzelungsstapels im Bereiche von ca. zehn Beuteln und variiert vorteilhafterweise um nur ca. drei Beutel.

Die Gegenstände 2 werden beispielsweise von oben in den Vorstapel-Bereich 1.1 des Stapelkanales 1 zugeliefert, entweder batch-weise, also bereits in Stapelform, oder quasi kontinuierlich, also einzeln. Dabei ist lediglich darauf zu achten, dass bei der Einbringung nicht allzu grosse Lücken im Vorstapel 3 entstehen. Bereits gestapelte Gegenstände 2 (batch-weise Zulieferung) können statt von oben auch in Förderrichtung F zugeliefert werden, wobei es vorteilhaft ist, während einer derartigen Zulieferung die Mittel zur Führung der einzelnen Gegenstände (Bürstenbänder 4) im entsprechenden Bereich aus dem Stapelkanal 1 zu entfernen (zu desaktivieren), beispielsweise durch Wegschwenken, wie dies in der Figur 1 strichpunktiert angedeutet ist.

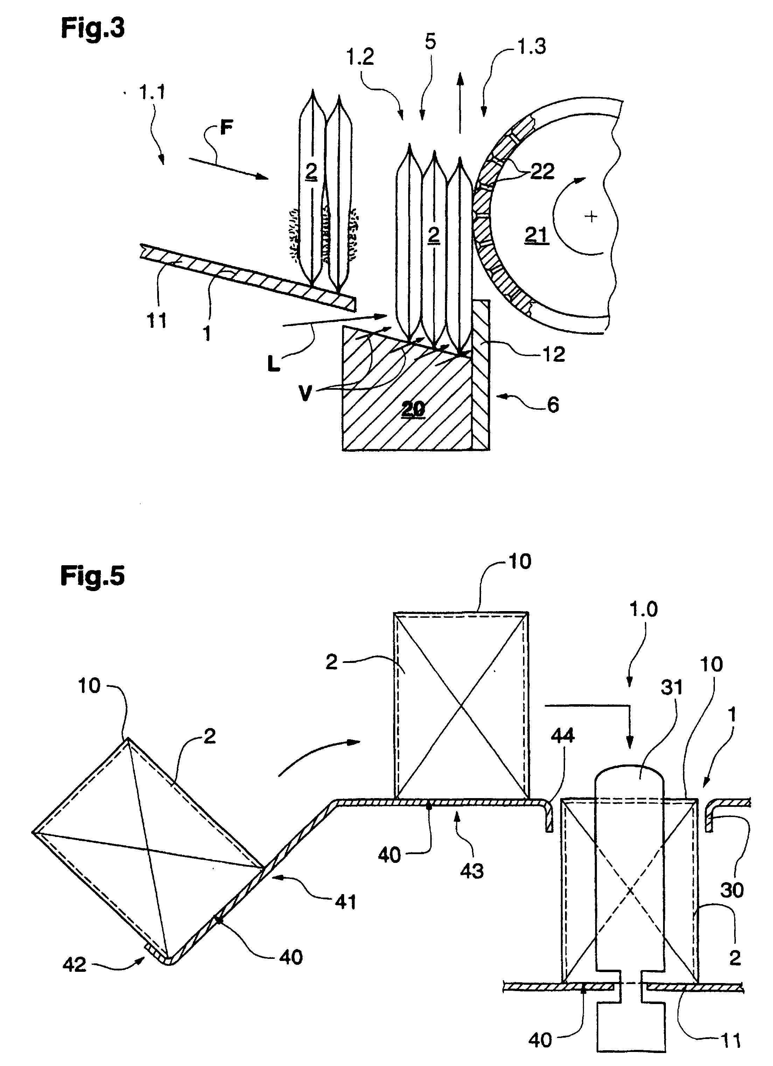

**Figur 2** illustriert den bereits oben angesprochenen Schritt des batch-weisen Zufügens von Gegenständen zum Vorstapel 3 in Förderrichtung F, wobei Figur 2 wiederum eine Draufsicht auf einen Stapelkanal 1 darstellt Die Gegenstände 2 sind für diese Zulieferung durch entsprechende Haltemittel in liegenden Stapeln gehalten, beispielsweise in auf einer Stapelseite offenen Schachteln 10 oder in entsprechenden, auf zwei gegenüberliegenden Seiten offenen Rahmen, in denen die Gegenstände lokker gestapelt und seitlich gehalten sind. Zusammen mit der Schachtel 10 (Öffnung gegen unten) wird der sich in der Schachtel 10 befindende Stapel von Gegenständen 2 (batch) in einem Zufügebereich 1.0 des Stapelkanals 1 positioniert (beispielsweise nach Entfernen der Kanalwand seitlich eingeschoben oder wie in der Figur 5 dargestellt) und dann immer noch mit der Schachtel mit geeigneten Mitteln in Förderrichtung F in den Vorstapel-Bereich 1.1 gefördert, beispielsweise mit einem nicht dargestellten Schieber, wobei die Förderkraft primär an der Schachtel 10 angreift und die Gegenstände 2 durch die Schachtel 10 in ihrer gegenseitigen, lockeren Ordnung gehalten werden.

Die Mittel zur Führung der einzelnen Gegenstände (z.B. Bürstenbänder 4) im Vorstapel 3 sind aus dem Stapelkanal 1 entfernt, wenn eine Schachtel 10 in den Vorstapel-Bereich 1.1 zugefördert wird, derart, dass die Zuförderung der Schachtel 10 durch die Führungsmittel nicht behindert wird, und derart, dass die Führung der einzelnen Gegenstände im Vorstapel 3 flussabwärts von der Schachtel 10 nicht gestört wird. Dies kann beispielsweise realisiert werden durch zwei aufeinanderfolgende Paare von Bürstenbändern 4.1 und 4.2, von denen das in Förderrichtung F hintere oder eingansseitige Bürstenbänderpaar 4.1 eine Länge hat, die einer Schachtellänge im wesentlichen entspricht, und quer zur Förderrichtung auseinander bewegbar ist Eine derartige Ausführungsform ist in der Figur 2 dargestellt. Andererseits können zur Entfernung der Mittel (4) zur Führung der einzelnen Gegenstände des Vorstapels aus dem Stapelkanal 1 auch nur die stromaufwärts gerichteten Enden eines einzigen Bürstenbänderpaares quer zur Förderrichtung auseinanderbewegbar sein, wie dies in der Figur 1 angedeutet ist.

Sobald die Schachtel 10 mit den Gegenständen 2 im Vorstapel-Bereich 1.1 des Stapelkanals 1 positioniert ist, wird sie gegen oben aus dem Stapelkanal 1 entfernt und werden gleichzeitig die Mittel zum Führen der einzelnen Gegenstände zugestellt, derart, dass die Führung der Gegenstände durch die Schachtel 10 möglichst gleitend von den Führungsmitteln des Vorstapel-Bereiches 1.1 übernommen wird. Ist im Bereiche der eingeführten Schachtel 10 ein separates Paar 4.1 von Bürstenbändern vorgesehen (Figur 2), ist es vorteilhaft, dessen Bewegung in Förderrichtung F mindestens während der Zustellung zu stoppen und erst wieder anzutreiben, wenn die Schachtel 10 ganz aus dem Bereich des Vorstapels 3 entfernt ist.

Anstelle der oben beschriebenen Schachtel 10 oder eines entsprechenden Rahmens kann zum batch-weisen Zufügen von Gegenständen 2 zum Vorstapel 3 auch eine Vorrichtung zur Anwendung kommen, wie sie in der Publikation EP-0706967 (oder US-5601396, F394) der gleichen Anmelderin beschrieben ist. Diese Vorrichtung weist zwei Klemmbacken auf, mit denen ein liegender Stapel von Gegenständen seitlich ergriffen und direkt im Vorstapel-Bereich 1.1 einer erfindungsgemässen Vorrichtung positioniert werden kann.

**Figur 3** illustriert den Schritt der Vereinzelung in einer bevorzugten Ausführungsform der erfindungsgemässen Vorrichtung, von der das Ende des Vorstapel-Bereiches 1.1., der Vereinzelungsstapel-Bereich 1.2 und der Vereinzelungs-Bereich 1.3 gezeigt ist. Der Stapelkanal 1 ist hier parallel zur Förderrichtung F geschnitten und die Blickrichtung ist im wesentlichen waagrecht. Der Stapelkanal 1, von dem nur der Boden 11 und ein Anschlag 12 am Vereinzelungs-seitigen Ende 6 dargestellt ist, ist mindestens im dargestellten Bereich in Förderrichtung F leicht fallend. Der Endbereich des Kanalbodens 11 wird durch einen Vibrator 20 gebildet, der eine Vibration (Pfeile V) mit einer Komponente in Förderrichtung F erzeugt. Die Vibratoroberfläche ist gegenüber dem Kanalboden 11 abgesenkt, derart, dass dazwischen eine Stufe entsteht. Diese Stufe stellt ein geeignetes Mittel zur Einführung einer zusätzlichen Förderkraft in Form eines Luftstrahles (Pfeil L) oder einer Reihe von im wesentlichen parallelen Luftstrahlen dar.

Für die Vereinzelung der Gegenstände 2 aus dem Vereinzelungsstapel 5 ist beispielsweise in an sich bekannter Weise eine Rolle 21 vorgesehen, deren Oberfläche in vorgegebenen Bereichen Saugdüsen 22 aufweist, das heisst, Öffnungen, die die Rollenoberfläche mit einem evakuierbaren Innenhohlraum verbinden. Die Rolle 21 ist derart dimensioniert und angeordnet und wird derart rotierend angetrieben, dass durch die Wirkung der Saugdüsen 22 der jeweils vorderste Gegenstand des Vereinzelungsstapels 5 in gewünschter Weise gegen oben vom Vereinzelungsstapel 5 weggezogen und für die Wegförderung beispielsweise zwischen zwei Klemmbänder (nicht dargestellt) eingeführt wird. Durch die Wirkung des Vibrators 20 und der Luftstrahlen L werden die Gegenstände 2 des Vereinzelungsstapels 5 nach jedem Entfernen des momentan vordersten Gegenstandes wieder positioniert für die Entfernung des nächsten Gegenstandes. Dank der sehr kleinen Zahl von Gegenständen im Vereinzelungsstapel 5 können die Gegenstände darin mit sehr kleinen Kräften gefördert und derart gegeneinander gehalten werden, dass ihre relativen Positionen zur Aufrechterhaltung des Stapels genügend stabil sind.

Die Nachspeisung von Gegenständen 2 zum Vereinzelungsstapel 5 kann eine kontinuierliche sein, wobei die Antriebe der Fördermittel des Vorstapels (z.B. Bürstenbänder) mit dem Antrieb der Rolle 21 gekoppelt ist. Da die Gegenstandsdichte im Vorstapel 3 aber leicht variieren kann, ist es vorteilhafter, die Zahl der Gegenstände im Vereinzelungsstapel 5 bzw. die Stapelhöhe (oder -länge) des Vereinzelungsstapels 5 sensorisch zu erfassen und mit Hilfe des Sensorsignales zur Regulierung der Stapelhöhe des Vereinzelungsstapels 5 den Antrieb der Fördermittel des Vorstapels 3 zu steuern. Dabei ist die Zahl der Gegenstände im Vereinzelungsstapel 5 den Eigenschaften der Gegenstände entsprechend so einzustellen, dass der Vereinzelungsstapel 5 unbedingt stabil bleibt.

**Figur 4** zeigt eine bevorzugte Ausführungsform der erfindungsgemässen Vorrichtung in der gleichen Sichtweise wie Figur 3. Die Vorrichtung dient zur Durchführung derjenigen Ausführungsform des erfindungsgemässen Verfahrens, die im Zusammenhang mit den Figuren 1, 2 und 3 bereits beschrieben wurde. Bereits im Zusammenhang mit diesen Figuren beschriebene Vorrichtungsteile sind mit denselben Bezugszeichen bezeichnet.

Die Vorrichtung weist einen Stapelkanal 1 auf mit einem Kanalboden 11 und seitlichen Kanalwänden 30. Der Stapelkanal 1 ist vorteilhafterweise in Förderrichtung F abfallend und hat eine einstellbare Breite. Im Bereiche des Kanalendes 6 bildet ein Vibrator 20 den Kanalboden und der Stapelkanal 1 ist durch einen Anschlag 12 abgeschlossen.

In Förderrichtung F folgen sich entlang dem Stapelkanal 1 die folgenden Bereiche: der Zufügebereich 1.0, der Vorstapel-Bereich 1.1, der Vereinzelungsstapel-Bereich 1.2 und der Vereinzelungsbereich 1.3. Im Zufügebereich 1.0 ist ein Schieber 31 zum Verschieben einer Schachtel oder eines Rahmens mit Gegenständen (nicht dargestellt) in Förderrichtung F vorgesehen. Im Vorstapel-Bereich 1.1 ist mindestens ein Paar von Bürstenbändern 4 vorgesehen, wobei die Bürstenbänder 4 eingangsseitig aus dem Bereich des Stapelkanals seitlich entfernbar sind (siehe Figuren 1 und 2). Im Vorstapel-Bereich 1.1 könnte der Kanalboden 11 als Förderband ausgebildet sein und zusätzlich zu den Bürstenbändern 4 als Fördermittel dienen.

Ferner sind im Vorstapel-Bereich 1.1 Mittel 33 zur Entfernung einer Schachtel oder eines Rahmens vorgesehen. Diese Entfernungsmittel 33 weisen beispielsweise eine absenkbare Traverse 34 mit Saugern 35 auf. Zur Entfernung einer Schachtel wird die Traverse 34 auf die im Stapelkanal 1 positionierte Schachtel abgesenkt, werden die Sauger 35 aktiviert und wird die Traverse 34 mit der von den Saugern 35 gehaltenen Schachtel angehoben.

Der Vereinzelungsstapel-Bereich 1.2 und der Vereinzelungsbereich 1.3 sind ausgebildet, wie dies bereits in der Figur 3 dargestellt und weiter oben entsprechend beschrieben wurde.

Figur 4 zeigt auch ganz schematisch zwei Steuerungen für den Betrieb der Vorrichtung. Diese laufen über eine Steuereinheit 36. Einerseits wird die Stapelhöhe des Vereinzelungsstapels sensorisch überwacht (Sensor 37) und wird das entsprechende Sensorsignal zur Steuerung der Fördermittel im Vorstapel-Bereich 1.1 verwendet; andererseits wird die Stapelhöhe des Vorstapels sensorisch überwacht (Sensor 38) und wird mit dem entsprechenden Sensorsignal die Zufügung von Gegenständen zum Vorstapel, beispielsweise die Bewegung des Schiebers 31 und die Bewegungen des Entfernungsmittels 33 gesteuert.

**Figuren 5, 6 und 7** zeigen Querschnitte durch die Ausführungsform der erfindungsgemässen Vorrichtung, wie sie im wesentlichen in der Figur 4 dargestellt ist. In der Figur 4 sind auch die entsprechenden Schnittebenen (V-V, VI-VI und VII-VII) eingezeichnet. Gleiche Vorrichtungsteile sind wiederum mit gleichen Bezugszeichen bezeichnet.

Figur 5 zeigt einen Schnitt durch den Zufügebereich 1.0. In diesem Schnitt ist eine bevorzugte Ausführung von Vorrichtungsteilen zur Zufügung von Gegenständen in Schachteln 10, die auf einer Stapelseite 40 offen sind, dargestellt. Die genannten Vorrichtungsteile bestehen aus einer ansteigenden Rampe 41 mit Fussstück 42 und einer zwischen der Rampe 41 und dem Stapelkanal 1 angeordneten Auflage 43.

Eine dem Vorstapel zuzufügende Schachtel 10 wird mit der Öffnung 40 gegen unten auf der Auflage 43 positioniert und von dort über den Stapelkanal 1 geschoben und in den Stapelkanal abgesenkt. Wenn dieser Vorgang von Hand durchgeführt wird, kann mit einem leichten seitlichen Druck auf die Schachtel 10 dafür gesorgt werden, dass die Gegenstände 2, die in der Schachtel 10 locker gestapelt sind, nicht aus der Schachtel fallen.

Eine weitere Schachtel 10 kann von der Auflage 43 auch auf die Rampe 41 geschoben werden, wo sie vom Fussstück 42 gehalten wird. Eine derartig positionierte Schachtel steht in Bereitschaft und kann einfach über die Auflage 42 in den Stapelschacht 1 bewegt werden.

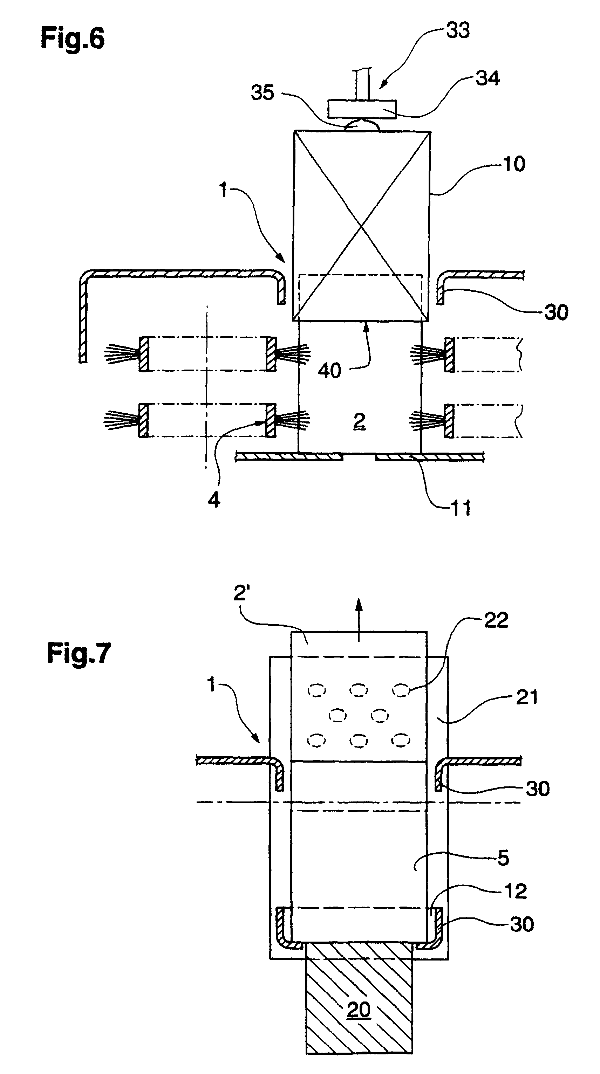

Figur 6 zeigt einen Schnitt durch den Stapelkanal 1 im Eingangsbereich des Vorstapel-Bereichs. Die Figur zeigt den Stapelkanal 1 mit Kanalboden 11 und Kanalwänden 30, ein Bürstenbänderpaar 4 sowie die Mittel 33 zum Entfemen der Schachtel 10 aus dem Stapelkanal 1. Die dargestellte Schachtel 10 ist fast vollständig aus dem Stapelkanal 1 entfernt und die Bürstenbänder 4 sind bereits zugestellt. Die Entfernung der Schachtel 10 mit Hilfe von am Schachtelboden (gegenüber der Schachtelöffnung 40) angreifenden Saugern 35 ist vorteilhaft, denn damit werden Kräfte auf die Schachtelseiten, durch die die Gegenstände 2 in der Schachtel 10 gehalten werden, vollständig vermieden.

Figur 7 zeigt einen Querschnitt durch den Stapelkanal 1 im Vereinzelungsstapel-Bereich (Blickrichtung gegen das Kanalende 6). Ein Gegenstand 2' wird eben von der Rolle 21 gegen oben vom Vereinzelungsstapel 5 weggezogen.

Es zeigt sich, dass es mit der erfindungsgemässen Vorrichtung möglich wird, Musterbeutel, wie sie eingangs beschrieben wurden, mit einer Vereinzelungsleistung von mehreren Zehntausend Beuteln pro Stunde zu vereinzeln und für die Vereinzelung nachzul iefern.

## Patentansprüche

1. Verfahren zur Zuführung von flächigen Gegenständen (2), insbesondere von flächigen Gegenständen (2) mit einem unregelmässigen und/oder veränderbaren Dickenprofil, zu einer Vereinzelung, wobei die Gegenstände (2) in einem im wesentlichen liegenden Stapel (3/5), in dem die Gegenstände (2) auf einer Kante oder Schmalseite aufstehen und der eine variierende Länge hat, der Vereinzelung in einer Förderrichtung (F) zugefördert und gleichzeitig gepuffert werden, wobei die Gegenstände (2) von einer im wesentlichen ortsfesten Stirnseite des Stapels (3/5) vereinzelt und weggefördert werden und wobei an der anderen Stirnseite des Stapels (3/5) Gegenstände (2) zum Stapel (3/5) zugefügt werden, **dadurch gekennzeichnet, dass** die Gegenstände (2) zu einem Vorstapel (3) zugefügt werden, in welchem Vorstapel (3) die Gegenstände auf einer Kante stehend und im wesentlichen einzeln seitlich geführt gegen die Vereinzelung gefördert werden, und dass der Vorstapel (3) vor der Vereinzelung in einen Vereinzelungsstapel (5) gewandelt wird, in welchem Vereinzelungsstapel (5) die Gegenstände (2) als Stapel geführt gegen die Vereinzelung gefördert werden, wobei die Zahl der Gegenstände (2) im Vorstapel (5) für die Pufferung im wesentlichen beliebig variiert wird und die Zahl der Gegenstände (2) im Vereinzelungsstapel (5) bedeutend kleiner ist als im Vorstapel (3) und in engen Grenzen konstant gehalten wird.

2. Verfahren nach Anspruch 1, **dadurch gekennzeichnet, dass** die Förderrichtung (F) leicht sinkend ist.

3. Verfahren nach Anspruch 1 oder 2, **dadurch gekennzeichnet, dass** die Gegenstände (2) dem Vorstapel (3) in Stapelformationen zugefügt werden.

4. Verfahren nach Anspruch 3, **dadurch gekennzeichnet, dass** jede Stapelformation durch einen Hub in Förderrichtung (F) in einen Vorstapel-Bereich (1.1) mit seitlicher Führung der einzelnen Gegenstände (2) gefördert wird, wobei die seitliche Führung während des Hubs desaktiviert und nach dem Hub wieder aktiviert wird.

5. Verfahren nach Anspruch 3 oder 4, **dadurch gekennzeichnet, dass** die Stapelformation von Gegenständen (2) während des Hubes in einer gegen unten offenen Schachtel (10) oder in einem Rahmen gehalten wird.

6. Verfahren nach Anspruch 5, **dadurch gekennzeichnet, dass** die Schachtel (10) oder der Rahmen nach dem Hub in Förderrichtung (F) gegen oben entfernt wird, und dass während der Entfernung die seitliche Führung aktiviert wird.

7. Verfahren nach Anspruch 3, **dadurch gekennzeichnet, dass** jede Stapelformation zwischen zwei Klemmbacken geklemmt von oben in einen Vorstapel-Bereich (1.1) mit seitlicher Führung der einzelnen Gegenstände (2) gebracht wird.

8. Verfahren nach Anspruch 1 oder 2, **dadurch gekennzeichnet, dass** die Produkte im Vereinzelungsstapel (5) durch Vibration (V) und/oder durch Luftstrahlen (L) gegen die Vereinzelung gefördert werden, wobei sie aneinander lehnen.

9. Verfahren nach Anspruch 8, **dadurch gekennzeichnet, dass** die Zahl der Gegenstände (2) im Vereinzelungsstapel (5) in Abhängigkeit von Eigenschaften der Gegenstände (2) eingestellt wird.

10. Verfahren nach Anspruch 1 oder 2, **dadurch gekennzeichnet, dass** die Gegenstände (2) vom Vereinzelungsstapel (5) gegen oben vereinzelt werden.

11. Vorrichtung zur Zuführung von flächigen Gegenständen (2), insbesondere von flächigen Gegenständen (2) mit einem unregelmässigen und/oder veränderbaren Dickenprofil, zu einer Vereinzelung, welche Vorrichtung einen Stapelkanal (1) zur Führung eines im wesentlichen liegenden Stapels (3/5) von Gegenständen, Mittel zur Förderung der im Stapelkanal (1) gestapelten Gegenstände (2) in einer Förderrichtung (F) gegen ein Vereinzelungs-seitiges Ende (6) des Stapelkanales (1), am Vereinzelungs-seitigen Ende (6) des Stapelkanals (1) angeordnete Mittel zur Vereinzelung der Gegenstände (2) und im Bereiche des gegenüberliegenden Endes des Stapelkanals (1) angeordnete Mittel zur Zufügung von Gegenständen (2) zum Stapel (3/5) aufweist, **dadurch gekennzeichnet, dass** der Stapelkanal (1) einen Vorstapel-Bereich (1.1) aufweist mit seitlichen, an den einzelnen, in einem Vorstapel (3) gestapelten Gegenständen (2) angreifenden Führungsmitteln zum Führen und Fördern der Gegenstände und in Förderrichtung (F) nach dem Vorstapel-Bereich (1.1) einen Vereinzelungsstapel-Bereich (1.2) mit Mitteln zum Führen und Fördern eines Vereinzelungsstapels (5), wobei der Vorstapel-Bereich (1.1) eine bedeutend grössere Länge aufweist als der Vereinzelungsstapel-Bereich (1.2) und wobei Steuermittel vorgesehen sind, die die Zahl von Gegenständen (2) im Vereinzelungsstapel (5) in engen Grenzen konstant halten.

12. Vorrichtung nach Anspruch 11, **dadurch gekennzeichnet, dass** der Stapelkanal (1) gegen sein die Vereinzelungs-seitiges Ende (6) sinkend angeordnet ist.

13. Vorrichtung nach einem der Ansprüche 11 oder 12, **dadurch gekennzeichnet, dass** die Mittel zum Zufügen von Gegenständen (2) zum Vorstapel (3) einen in Förderrichtung (F) vor dem Vorstapel-Bereich (1.1) angeordneten Zufügungs-Bereich (1.0) des Stapelkanals (1) aufweisen und dass in diesem Zufügungs-Bereich (1.0) ein Mittel zur Verschiebung einer Stapelformation von Gegenständen (2) in Förderrichtung (F) vorgesehen ist.

14. Vorrichtung nach Anspruch 13, **dadurch gekennzeichnet, dass** das Mittel zur Verschiebung ein Schieber (31) ist.

15. Vorrichtung nach Anspruch 13, **dadurch gekennzeichnet, dass** im Eingangsbereich des Vorstapel-Bereichs (1,1) die seitlichen Führungsmittel aktivierbar und desaktivierbar sind.

16. Vorrichtung nach Anspruch 14 oder 15, **dadurch gekennzeichnet, dass** die seitlichen Führungsmittel Bürstenbänderpaare (4, 4.1, 4.2) sind, die zur Desaktivierung mindestens teilweise aus dem Bereich des Stapelkanals (1) entfernbar sind.

17. Vorrichtung nach einem der Ansprüche 14 bis 16, **dadurch gekennzeichnet, dass** im Eingangsbereich des Vorstapel-Bereiches (1.1) Mittel (33) zur Entfernung von Schachteln (10) aus dem Stapelkanal (1) vorgesehen sind, in welchen Schachteln (10) Stapelformationen von Gegenständen (2) vom Zufügungs-Bereich (1.0) in den Vorstapel-Bereich (1.1) verschoben und dann entfernt werden.

18. Vorrichtung nach einem der Ansprüche 14 bis 17, **dadurch gekennzeichnet, dass** im Zufügungs-Bereich (1.0) zur Einbringung von Schachteln (10), die eine Schuppenformation von Gegenständen (2) enthalten, in den Stapelkanal (1) eine Rampe (41) mit Fussstück (42) und eine Auflage (43) vorgesehen sind.

19. Vorrichtung nach einem der Ansprüche 10 oder 11, **dadurch gekennzeichnet, dass** die Fördermittel im Vereinzelungsstapel-Bereich (1.2) des Stapelkanales (1) einen Vibrator (20) und Luftstrahlen (L) aufweisen.

20. Vorrichtung nach Anspruch 19, **dadurch gekennzeichnet, dass** der Boden (11) des Stapelkanales (1) am Übergang vom Vorstapel-Bereich (1.1) zum Vereinzelungsstapel-Bereich (1.2) eine Stufe aufweist.

21. Vorrichtung nach Anspruch 11, **dadurch gekennzeichnet, dass** die Steuermittel zusätzlich zur Steuerung der Zufügung von Gegenständen (2) in den Vorstapel-Bereich (1.1) ausgerüstet sind.

22. Vorrichtung nach Anspruch 13 und 17, **dadurch gekennzeichnet, dass** die Steuermittel einen Sensor (38) zur Erfassung des Füllstandes des Stapelkanals (1) im Vorstapel-Bereich (1.1) aufweisen und zur Steuerung der Mittel zum Verschieben von Schuppenformationen von Gegenständen (2) vom Zufügungs-Bereich (1.0) in den Vorstapel-Bereich (1.1) und Mittel (33) zur Entfernung von Schachteln (10) oder Rahmen aus dem Vorstapel-Bereich (1.1) anhand des erfassten Füllstandes ausgerüstet sind.

## Claims

1. Method for feeding flat items (2), in particular flat items (2) with an irregular and/or changeable thickness profile, to individualization, wherein the items (2) are fed to the individualization in a conveying direction (F) and at the same time buffered being arranged in a substantially lying stack (3/5) with a varying stack length in which stack the items stand on one edge or narrow side, wherein the items (2) are individualized and conveyed away from a substantially stationary face of the stack (3/5) and wherein items are supplied to the stack (3/5) on the other face of the stack (3/5), **characterized in that** the items (2) are supplied to a pre-stack (3) in which pre-stack (3) the items are conveyed towards the individualization standing on one edge and guided laterally substantially individually and that the pre-stack (3) is transformed to an individualizing stack (5) before individualization in which individualizing stack (5) the items (2) are conveyed towards the individualization guided as a stack, wherein for buffering the number of items (2) in the pre-stack (5) is variable to a substantially freely selectable degree and the number of items (2) is considerably smaller in the individualizing stack (5) than in the pre-stack (3) and is kept constant within narrow limits.

2. Method according to claim 1, **characterized in that** the conveying direction (F) slopes slightly downwards.

3. Method according to one of claims 1 or 2, **characterized in that** the items (2) are supplied to the pre-stack (3) in stack formations.

4. Method according to claims 3, **characterized in that** each stack formation is conveyed by a travel in a conveying direction (F) into a pre-stack region (1.1) being equipped with means for lateral guidance of the individual items (2), wherein the means for lateral guidance are deactivated during the travel and reactivated after the travel.

5. Method according to claim 3 or 4, **characterized in that** during the travel the stack formation of items (2) is supported in a box (20) being open on a lower side or in a frame.

6. Method according to claim 5, **characterized in that** the box (10) or the frame is removed upwards after the travel in conveying direction (F) and that during the removal the means for lateral guidance are activated.

7. Method according to claim 3, **characterized in that** each stack formation is clamped between two clamping jaws and is brought from above into a pre-stack region (1.1) equipped with means for lateral guidance of the individual items (2).

8. Method according to claim 1 or 2, **characterized in that** the items in the individualizing stack (5) are conveyed towards individualization by means of vibration (V) and/or by means of air streams (L), while leaning against each other.

9. Method according to claim 8, **characterized in that** the number of items (2) in the individualizing stack (5) is adjusted depending on characteristics of the items (2).

10. Method according to claim 1 or 2, **characterized in that** the items (2) are separated from the individualizing stack (5) by being moved upwards.

11. Device for feeding flat items (2), in particular flat items (2) with an irregular and/or changeable thickness profile, to individualization, which device comprises a stack channel (1) for guiding a substantially lying stack (3/5) of items, means for conveying the items (2) stacked in the stack channel (1) in a conveying direction (F) towards an individualizing-side end (6) of the stack channel (1), means for individualizing the items (2) arranged on the individualizing-side end of the stack channel (1) and means for supplying items (2) to the stack (3/5) in the region of the opposite end of the stack channel (1), **characterized in that** the stack channel (1) comprises a pre-stack region (1.1) which for guiding and conveying the items in conveying direction (F) is equipped with lateral guiding means acting on individual items (2) stacked in a pre-stack (3) and downstream of the pre-stack region (1.1) an individualizing-stack region (1.2) with means for guiding and conveying an individualizing stack (5), wherein the pre-stack region (1.1) has a considerably greater length than the individualizing-stack region (1.2) and wherein control means are provided for keeping the number of items (2) in the individualizing-stack region constant within narrow limits.

12. Device according to claim 11, **characterized in that** the stack channel (1) is arranged sloping downwards towards its individualization-side end (6).

13. Device according to one of claims 11 or 12, **characterized in that** the means that in this supply region (1.0) means are provided for shifting of a stack formation of items (2) in conveying direction (F).

14. Device according to claim 13, **characterized in that** the means for shifting is a slide (31).

15. Device according to claim 13, **characterized in that** in an entry region of the pre-stack region (1.1) the lateral guiding means can be activated and deactivated.

16. Device according to claim 14 or 15, **characterized in that** the lateral guiding means are pairs of brush belts (4, 4.1, 4.2) which can be removed at least partly from the region of the stacking channel (1).

17. Device according to one of claims 14 to 16, **characterized in that** in the entry region of the pre-stack region (1.1) means (33) for removing boxes (10) from the stack channel (1) are provided in which boxes (10) stacked formations of items (2) are shifted from the supply region (1.0) into the pre-stack region (1.1) and are then removed.

18. Device according to one of claims 14 to 17, **characterized in that** for introducing boxes (10) containing a scaled formation of items (2) into the stacking channel (1) a ramp (41) with a foot piece (42) and a support surface (43) are provided in the supply region (1.0).

19. Device according to one of claims 10 or 11, **characterized in that** the conveying means in the individualizing-stack region (1.2) of the stack channel (1) comprises a vibrator (20) and air streams (L).

20. Device according to claim 19, **characterized in that** a floor (11) of the stack channel (1) comprises a step where the pre-stack region (1.1) meets the individualizing stack region (1.2).

21. Device according to claim 11, **characterized in that** the control means are additionally equipped for controlling supply of items (2) to the pre-stack region (1.1).

22. Device according to claim 13 and 17, **characterized in that** the control means comprise sensor means for monitoring a filling level of the stack channel (1) in the pre-stack region (1.1) and are equipped for controlling on the basis of said filling level monitoring the means for shifting scaled formations of items (2) from the supply region (1.0) into the pre-stack region (1.1) and means (33) for removing boxes (10) or frames from the pre-stack region (1.1).

## Revendications

1. Procédé pour amener des objets plats (2), en particulier des objets plats (2) dont le profil d'épaisseur est irrégulier ou modifiable, vers un dispositif de séparation un à un, les objets (2) étant amenés en une pile (3/5) essentiellement horizontale dans laquelle les objets (2) sont placés debout sur un bord ou un côté étroit, la pile présentant une longueur variable, les objets étant séparés un à un et extraits par un côté frontal essentiellement fixe de la pile (3/5), des objets (2) étant ajoutés à la pile (3/5) par l'autre côté frontal de la pile (3/5), **caractérisé en ce que** les objets (2) sont ajoutés à une pré-pile (3) dans laquelle les objets sont transportés vers le dispositif de séparation un à un en étant posés sur un bord et guidés latéralement essentiellement individuellement, la pré-pile (3) étant transformée avant la séparation un à un en une pile (5) de séparation un à un dans laquelle les objets (2) sont transportés vers le dispositif de séparation un à un sous la forme d'une pile, le nombre des objets (2) dans la pré-pile (5) pouvant être modifié de manière essentiellement quelconque pour assurer le tamponnage et le nombre des objets (2) dans la pile (5) destiné à la séparation un à un étant nettement inférieur à celui des objets dans la pré-pile (3) et étant maintenu constant à l'intérieur d'étroites limites.

2. Procédé selon la revendication 1, **caractérisé en ce que** la direction de transport (F) est légèrement descendante.

3. Procédé selon la revendication 1 ou 2, **caractérisé en ce que** les objets (2) sont ajoutés à la pré-pile (3) par formations empilées.

4. Procédé selon la revendication 3, **caractérisé en ce que** chaque formation empilée est transportée par une course dans la direction de transport (F) dans une zone (1.1) de pré-empilement avec guidage latéral des objets individuels (2), le guidage latéral étant désactivé pendant la course et réactivé après la course.

5. Procédé selon la revendication 3 ou 4, **caractérisé en ce que** la formation empilée d'objets (2) est maintenue pendant la course dans un cartonnage (10) ouvert vers le bas ou dans un cadre.

6. Procédé selon la revendication 5, **caractérisé en ce que** le cartonnage (10) ou le cadre sont enlevés par le haut après la course dans la direction de transport (F) et **en ce que** pendant l'enlèvement, le guidage latéral est activé.

7. Procédé selon la revendication 3, **caractérisé en ce que** chaque formation empilée serrée entre deux mâchoires de serrage est amenée par le haut dans une région de pré-empilement (1.1) avec guidage latéral des objets (2) individuels.

8. Procédé selon la revendication 1 ou 2, **caractérisé en ce que** dans la pile (5) de séparation un à un, les produits sont transportés par vibration (V) et/ou par des jets d'air (L) en direction du dispositif de séparation un à un en s'appuyant les uns contre les autres.

9. Procédé selon la revendication 8, **caractérisé en ce que** le nombre des objets (2) dans la pile (5) de séparation un à un est réglé en fonction des propriétés des produits (2).

10. Procédé selon la revendication 1 ou 2, **caractérisé en ce que** les objets (2) sont séparés un à un vers le haut de la pile (5) de séparation un à un.

11. Dispositif pour amener des objets plats (2), en particulier des objets plats (2) qui présentent un profil d'épaisseur irrégulier et/ou variable, vers un dispositif de séparation un à un, lequel dispositif présente un canal d'empilement (1) pour guider une pile (3/5) essentiellement horizontale d'objets, des moyens pour le transport des objets (2) empilés dans le canal d'empilement (1) dans une direction de transport (F) en direction d'une extrémité (6) du canal d'empilement (1) situé du côté du dispositif de séparation un à un, des moyens disposés à l'extrémité (6) du canal d'empilement (1) situé du côté du dispositif de séparation un à un pour séparer les objets (2) un à un et des moyens disposés dans la région de l'extrémité opposée du canal d'empilement (1) pour ajouter des objets (2) à la pile (3/5), **caractérisé en ce que** le canal d'empilement (1) présente une zone (1.1) de pré-empilement dotée de moyens de guidage latéral qui s'engagent sur les objets (2) individuels empilés en une pré-pile (3) pour guider et transporter les objets et une région (1.2) d'empilement de séparation un à un, située en aval de la zone (1.1) de pré-empilement dans la direction du transport (F) et dotée de moyens pour guider et transporter une pile (5) de séparation un à un, la région (1.1) de pré-empilement présentant une longueur nettement plus grande que la région (1.2) de la pile de séparation un à un, des moyens de commande étant prévus pour maintenir constant dans d'étroites limites le nombre des objets (2) dans la pile (5) de séparation un à un.

12. Dispositif selon la revendication 11, **caractérisé en ce que** le canal d'empilement (1) est disposé de manière à descendre vers l'extrémité (6) située du côté du dispositif de séparation un à un.

13. Dispositif selon l'une des revendications 11 ou 12, **caractérisé en ce que** les moyens pour ajouter des objets (2) à la pré-pile (3) présentent une région d'ajout (1.0) du canal d'empilement (1) située en amont de la région de pré-empilement (1.1) dans la direction du transport (F) et **en ce que** dans cette région (1.0) d'ajout est prévu un moyen pour déplacer une formation empilée d'objets (2) dans la direction du transport (F).

14. Dispositif selon la revendication 13, **caractérisé en ce que** les moyens de déplacement sont constitués par un poussoir (31).

15. Dispositif selon la revendication 13, **caractérisé en ce que** les moyens de guidage latéral peuvent être activés et désactivés dans la région d'entrée de la région de pré-empilement (1.1).

16. Dispositif selon la revendication 14 ou 15, **caractérisé en ce que** les moyens de guidage latéral sont des paires de bandes à brosse (4, 4.1, 4.2) qui peuvent être éloignées au moins partiellement de la région du canal d'empilement (1) pour leur désactivation.

17. Dispositif selon l'une des revendications 14 à 16, **caractérisé en ce que** dans la région d'entrée de la région (1.1) de pré-empilement sont prévus des moyens (33) pour l'enlèvement de cartonnage (10) hors du canal d'empilement (1), des formations empilées d'objets (2) étant déplacés dans ces cartonnages (10) depuis la région d'ajout (1.0) jusque dans la région de pré-empilement (1.1) et étant ensuite enlevés.

18. Dispositif selon l'une des revendications 14 à 17, **caractérisé en ce que** dans la région d'ajout (1.0), une rampe (41) avec pièce de pied (42) et un support (43) sont prévus pour insérer dans le canal d'empilement (1) des cartonnages (10) qui contiennent une formation empilée obliquement d'objets (2).

19. Dispositif selon l'une des revendications 10 ou 11, **caractérisé en ce que** les moyens de transport présentent dans la région (1.2) d'empilement pour séparation un à un du canal d'empilement (1) un vibrateur (20) et des jets d'air (L).

20. Dispositif selon la revendication 19, **caractérisé en ce que** le fond (11) du canal d'empilement (1) présente un gradin à la transition entre la zone (1.1) de pré-empilement et la zone (1.2) de la pile de séparation un à un.

21. Dispositif selon la revendication 11, **caractérisé en ce que** les moyens de commande sont de plus équipés pour commander l'ajout d'objets (2) dans la région (1.1) de pré-empilement.

22. Dispositif selon les revendications 13 et 17, **caractérisé en ce que** les moyens de commande présentent un capteur (38) pour la détection de l'état de remplissage de canal d'empilement (1) dans la zone (1.1) de pré-empilement et pour la commande des moyens de déplacement des formations empilées obliquement d'objets (2) depuis la région d'ajout (1.0) jusque dans la région de pré-empilement (1.1) et des moyens (33) pour enlever les cartonnages (10) ou les cadres hors de la région (1.1) de pré-empilement, sur base de la détection de l'état de remplissage.
